# EUROPÄISCHE PATENTSCHRIFT

(11) **EP 2 848 113 B1**
(45) Veröffentlichungstag und Bekanntmachung des Hinweises auf die Patenterteilung: **17.05.2017**
(21) Anmeldenummer: 14181139.8
(22) Anmeldetag: 15.08.2014
(51) Int. Cl.: A01F 12/44

(54) **Reinigungseinrichtung für einen Mähdrescher**
Cleaning device for a combine
Dispositif de nettoyage pour une moissonneuse-batteuse

(30) Priorität: 17.09.2013 DE 102013218618
(43) Veröffentlichungstag der Anmeldung: 18.03.2015
(73) Patentinhaber: Deere & Company, Moline, IL 61265 (US)
(72) Erfinder: Weichholdt, Dirk, 57200 Woelfling les Sarreguemines (FR)
(74) Vertreter: Holst, Sönke

(56) Entgegenhaltungen:
- EP-A1- 1 378 161
- DE-A1-102005 031 053

## Beschreibung

Die Erfindung betrifft eine Reinigungseinrichtung für einen Mähdrescher, mit einem Förderboden, dessen Oberseite im Betrieb ein Gemisch aus Korn und Spreu zuführbar ist, einer an einem rückwärtigen Ende des Förderbodens angeordneten Fallstufe und einem Gebläse, das durch einen luftleitenden Kanal mit der Fallstufe verbunden ist.

### Stand der Technik

Mähdrescher dienen zur Ernte von Körnerfrüchten, wie Getreide oder Mais. Nach einem Dreschvorgang wird das Korn einer Reinigungsvorrichtung zugeführt, die es von der Spreu trennt, indem das gedroschene Korn über luftdurchströmte, in eine Schwingbewegung versetzte Siebe geführt wird. Die leichteren Verunreinigungen werden durch den Luftstrom aus dem Gehäuse der Reinigungsvorrichtung ausgetragen.

Die DE 102 28 866 A1 beschreibt einen Mähdrescher, bei dem das ausgedroschene Erntegut durch einen flächigen, geschlossenen Förderboden nach hinten gefördert wird. Am hinteren Ende des Förderbodens befinden sich Siebrechen und eine unterhalb des Förderbodens angeordnete Fallstufe, die durch einen sich unterhalb des Förderbodens erstreckenden, im Wesentlichen horizontalen Kanal vom Gebläse der Reinigungseinrichtung mit einem Luftstrom beaufschlagt wird. Die Unter- und Oberwand des Kanals sind unmittelbar vor der Fallstufe nach unten hin abgesenkt, um rückwärtig davon wieder anzusteigen. Dadurch sollen sowohl die Fallstufe als auch der Siebrechen wirksam mit einem von Turbulenzen freien, homogenen und in seiner Intensität steuerbaren Luftstrom durchströmt werden. Rückwärtig der Fallstufe folgen eine verzahnte Arbeitsfläche zur Abförderung des Korns, eine weitere, mit einem Luftstrom beaufschlagte Fallstufe sowie ein Ober- und ein Untersieb.

Die DE 10 2005 031 053 A1 beschreibt einen Mähdrescher, bei dem am rückwärtigen Ende eines Förderbodens ebenfalls ein Fingerrechen und eine Fallstufe vorgesehen sind, die durch einen mit dem Gebläse verbundenen Kanal mit einem Luftstrom versorgt werden. Unterhalb der Fallstufe befindet sich ein Vorreinigungssieb, dem eine weitere Fallstufe, ein Obersieb und ein Untersieb folgen. An der Vorderkante des Vorreinigungssiebs ist ein keilförmiges Luftverteilerelement mit seiner Rückseite um eine sich horizontal und quer zur Vorwärtsrichtung erstreckende Achse verstellbar angeordnet. Das Luftverteilerelement dient dazu, die Menge des Luftstroms durch die Fallstufe zu verändern.

### Aufgabe der Erfindung

Die der Erfindung zu Grunde liegende Aufgabe wird darin gesehen, eine gegenüber dem Stand der Technik verbesserte Reinigungseinrichtung bereitzustellen, die auf wenig aufwändige Weise eine Beaufschlagung der Fallstufe mit einem schräg nach oben und hinten gerichteten Luftstrom ermöglicht.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Reinigungseinrichtung für einen Mähdrescher umfasst einen Förderboden, dessen Oberseite im Betrieb von einer Drescheinrichtung ein noch ungereinigtes Gemisch aus Korn und Spreu zuführbar ist. An einem rückwärtigen Ende des Förderbodens ist eine Fallstufe vorgesehen. Ein Gebläse ist durch einen luftleitenden Kanal mit der Fallstufe verbunden. In dem der Fallstufe direkt benachbarten Bereich des Kanals ist wenigstens ein separates, vorzugsweise winkelförmiges und/oder konkav gekrümmtes Luftleitelement angeordnet, welches den vom Gebläse her einlaufenden, horizontalen Luftstrom im Betrieb nach schräg nach oben und hinten hin ablenkt.

Durch das Luftleitelement erreicht man auf wenig aufwändige Weise, dass der vom Gebläse horizontal einlaufende Luftstrom ohne nennenswerte Bildung von Turbulenzen nach hinten und oben umgelenkt wird. Durch die nach oben gerichtete Geschwindigkeitskomponente des Luftstromes erhält man eine verbesserte Trennung von Korn und Verunreinigungen an der Fallstufe, denn die Verunreinigungen werden nicht nur nach hinten, sondern auch in einem gewissen Maße nach oben geblasen, während das Korn aufgrund der Schwerkraft nach unten fällt.

Eine untere Wand des Kanals kann in sich flach und horizontal sein. Die obere Wand des Kanals wird hingegen vorzugsweise durch den Förderboden gebildet, obwohl es auch denkbar wäre, eine vom Förderboden getrennte, obere Wand des Kanals vorzusehen.

Das Gebläse kann ein Gehäuse mit einem in seinen vorderen, oberen Bereich liegenden Auslass aufweisen, an den sich der Kanal anschließt. Der Luftstrom wird vom Gebläse demnach schräg nach vorn und oben hin abgegeben und kann daher durch einen sich an den Auslass anschließende Bereich des Kanals, der sich mehr oder weniger nach vorn, jedoch nach oben erstreckt und dann nach hinten umbiegt, an den horizontalen Bereich des Kanals unterhalb des Förderbodens weitergeleitet werden. Der Kanal ist demnach relativ lang, was die Bildung von Turbulenzen an der Fallstufe vermeidet und den Luftstrom auch hin hinreichendem Maße von der Schwingbewegung der Reinigungseinrichtung unabhängig werden lässt.

Am rückwärtigen Ende des Förderbodens kann ein Fingerrechen angeordnet werden.

Stromab der Fallstufe folgt oder folgen bezüglich der Förderrichtung des Korns vorzugsweise ein Vorreinigungssieb und/oder ein Förderboden. Das Gemisch aus Korn und der nach dem Durchlauf der Fallstufe verbleibenden Streu wird dann von dort einer weiteren Fallstufe, einem Obersieb und schließlich einem Untersieb zugeführt.

Das Luftleitelement kann um eine horizontale und quer verlaufende Achse verstellbar sein, um die Richtung des Luftstroms in der Fallstufe variieren zu können. Außerdem bietet es sich an, mehrere Luftleitelemente im der Fallstufe benachbarten Bereich des Kanals übereinander anzuordnen.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers mit einer Reinigungseinrichtung, und
- Fig. 2: eine vergrößerte, schematische seitliche Ansicht der Reinigungseinrichtung des Mähdreschers aus Figur 1.

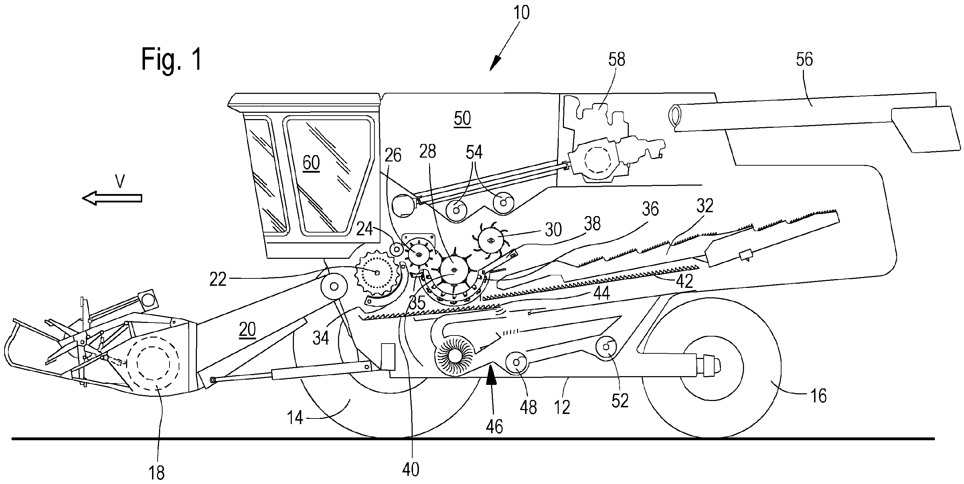

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

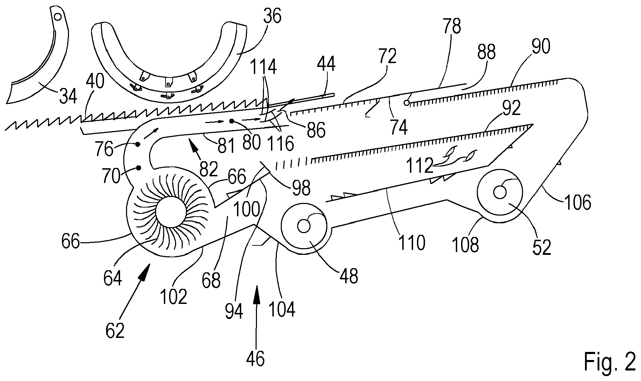

Unterhalb des Mehrtrommeldreschwerks befindet sich ein vorderer Förderboden 40, der im Betrieb eine abwechselnd nach vorn und hinten gerichtete Schwingbewegung durchführt. Ein hinterer Förderboden 42 ist unterhalb des Strohschüttlers 32 angeordnet und vollführt im Betrieb ebenfalls eine abwechselnd nach hinten und vorn gerichtete Schwingbewegung. Der vordere Förderboden 40 transportiert das durch den Dreschkorb 34 und durch den Tangentialseparator 36 nach unten hindurch tretende Gemisch aus Korn, Kurzstroh und Spreu nach hinten, während der hintere Förderboden 42 das durch den Strohschüttler 32 hindurch strömende Gemisch aus Korn, Kurzstroh und Spreu nach vorn transportiert. Der hintere Förderboden 42 übergibt sein Gemisch an seinem vorderen Ende an den vorderen Förderboden 40, der es durch einen rückwärtigen Fingerrechen 44 nach unten abgibt. Das vom vorderen Förderboden 40 abgegebene Gemisch gelangt dann in eine Reinigungseinrichtung 46, die in der Figur 2 detaillierter dargestellt ist. Der hintere Förderboden 42 könnte sein Gemisch auch direkt an die Reinigungseinrichtung 46 abgeben.

Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite der Reinigungseinrichtung 46 durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden. Es ist aber auch denkbar, einen rotierenden Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden.

Die Reinigungseinrichtung 46 ist in der Figur 2 in einer vergrößerten seitlichen Ansicht wiedergegeben. Sie umfasst ein Gebläse 62, das sich aus einem in Drehung (in der Figur 2 im Gegenuhrzeigersinn) versetzbaren Rotor 64 und einem den Rotor 64 umschließenden Gehäuse 66 zusammensetzt. Das Gehäuse 66 hat einen ersten Gebläseauslass 68 und einen zweiten Gebläseauslass 70.

Weiterhin umfasst die Reinigungseinrichtung 46 ein Vorreinigungssieb 72 mit in einem Siebrahmen abgestützten, dort um ihre Längsachse im Winkel verstellbar gelagerten Sieblamellen, das sich unterhalb des Fingerrechens 44 befindet und sich näherungsweise von der rückwärtigen Kante des vorderen Förderbodens 40 horizontal nach hinten und geringfügig nach oben erstreckt. Am rückwärtigen Ende des Vorreinigungssiebs 72 folgt ein geschlossenes Blech 74 sowie ein hinter dem Blech 74 angeordneter Fingerrechen 78.

Der zweite Gebläseauslass 70 ist schräg nach vorn und oben gerichtet und leitet die Luft in einen Kanal 82, der sich aus einem ersten, sich schräg nach oben und vorn erstreckenden Abschnitt 76 und einem zweiten, horizontalen Abschnitt 80 zusammensetzt, der sich unterhalb des Förderbodens 40 befindet und geringfügig hinter dem rückwärtigen Ende des Förderbodens 40 endet. Die durch den Kanal 82 geführte Luft gelangt zu einer Fallstufe 86, die sich vertikal zwischen dem rückwärtigen Ende des vorderen Förderbodens 40 und dem Vorreinigungssieb 72 befindet, und bewirkt bereits eine gewisse Trennung von schwererem Korn und leichterer Spreu, die nach hinten fort getragen wird.

Der erste Abschnitt 76 des Kanals 82 wird durch Wände begrenzt, die mit dem Gehäuse 66 des Gebläses 62 verbunden sind und im oberen Bereich nach hinten hin abgewinkelt sind. Die vordere Wand endet unterhalb des Förderbodens 40 und erstreckt sich nur über eine kurze Strecke horizontal, denn die obere Wand des zweiten Abschnitts 80 des Kanals 82 wird durch den Förderboden 40 gebildet. Die untere Wand 81 des zweiten Abschnitts 80 des Kanals 82 erstreckt sich jedoch über eine größere Länge in horizontaler Richtung, bis zur Fallstufe 86.

Zwecks Umlenkung der Luft des Kanals 82 nach oben sind unmittelbar vor der Fallstufe 86 zwei Luftleitelemente 114 innerhalb des zweiten Abschnitts 80 angeordnet. Sie sind in vertikaler Richtung übereinander und zwischen der unteren Wand des zweiten Abschnitts 80 und dem Förderboden 44 positioniert. Die Luftleitelemente 114 sind in sich winkelförmig gestaltet und umfassen demnach einen vorderen, sich horizontal erstreckenden Abschnitt und einen rückwärtigen, sich schräg nach hinten und oben erstreckenden Abschnitt. Zwischen den beiden Abschnitten ist eine horizontale und sich quer zur Vorwärtsrichtung erstreckende Drehachse 116 vorgesehen, um welche die Luftleitelemente 114 gemeinsam oder separat voneinander verstellt werden können, um die Richtung der Luft zwecks Anpassung an unterschiedliche Erntegutverhältnisse zu verändern. Diese Verstellung kann manuell vor Ort oder mittels eines fremdkraftbetätigten Aktors durch den Bediener in der Kabine 60 oder eine selbsttätige Kontrolleinheit erfolgen. Bei leichteren Körnern (z.B. Weizen) wird der Luftstrom in der Regel mehr nach oben gerichtet, während er bei schwereren Körnern (z.B. Mais) mehr nach hinten gerichtet sein wird. Der sich ergebende Luftstrom wird in der Figur 2 durch die Pfeile angedeutet.

Es könnte auch nur ein einziges Luftleitelement 114 verwendet werden, oder es werden drei oder mehr Luftleitelemente 114 genutzt. Anstelle der Winkelform könnten die Luftleitelemente auch in sich flach sein oder konkav gekrümmt.

Stromab der Fallstufe 86 folgt, wie bereits erwähnt, das Vorreinigungssieb 72. Korn und in einem gewissen Maß auch Spreu fallen zwischen den Sieblamellen des Vorreinigungssiebs 72 hindurch und gelangen auf einen Rost 96, während das verbleibende Gemisch aus Korn, Kurzstroh und Spreu an der Rückseite des Vorreinigungssiebs 72 durch den Fingerrechen 78 hindurch nach unten fällt. Dort gelangt es über eine weitere Fallstufe 88 auf ein Obersieb 90, unter dem ein Untersieb 92 angeordnet ist. Das Obersieb 90 und das Untersieb 92 umfassen jeweils in einem Rahmen angeordnete, um ihre Längsachse im Winkel unabhängig voneinander verstellbare Sieblamellen. Der Rost 96 ist zwischen dem vorderen Ende des Untersiebs 92 und einem oberen Leitblech 94 angeordnet, das sich am ersten Gebläseauslass 68 an das Gehäuse 66 anschließt und sich schräg nach hinten und oben erstreckt. Oberhalb einer dem Rost 96 benachbarten Kante 98 erstreckt sich das obere Leitblech 94 in einem Bereich 100 wiederum schräg nach vorn und oben und endet in der Nähe des rückwärtigen Endes der unteren Wand des zweiten Abschnitts 80 des Kanals 82 oder ist damit verbunden.

Der untere Teil des Gehäuses 66 des Gebläses 62 geht rückwärtig des ersten Gebläseauslasses 68 nach hinten in ein unteres Leitblech 102 über, das unterhalb des Bereichs 100 in einen trichterförmigen Sumpf 104 der Körnerschnecke 48 übergeht. An das rückwärtige Ende des Obersiebs 90 schließt sich ein rückwärtiges Bodenblech 106 an, das sich schräg nach unten und vorn erstreckt und in einen trichterförmigen Sumpf 108 der Überkehrschnecke 52 übergeht. Ein unterer Förderboden 110 erstreckt sich vom rückwärtigen Ende des Untersiebs 92 oberhalb des rückwärtigen Bodenblechs 106 und oberhalb der Überkehrschnecke 52 schräg nach vorn und unten und endet oberhalb des Sumpfs 104 der Körnerschnecke 48. Unterhalb des Untersiebs 92 sind Luftleitbleche 112 angeordnet.

Durch nicht eingezeichnete Antriebe werden die Förderböden 40 und 42 sowie das Vorreinigungssieb 72 mit der Leitfläche 76 und dem Fingerrechen 78, das Obersieb 90, das Untersieb 92 mit dem Rost 96, und der untere Förderboden 110, die sämtlich durch Schwingen am Rahmen 12 abgestützt sind, durch den Verbrennungsmotor 58 während des Betriebs in eine im Wesentlichen nach vorn und hinten und in geringerem Maße nach oben und unten gerichtete Bewegung versetzt. Dazu sind sie in einem in den genannten Richtungen schwingenden Siebkasten angebracht. Sie können sich jeweils gleich- oder zumindest teilweise gegensinnig bewegen. Hierzu wird auf die Offenbarung der DE 30 42 734 C verwiesen. Das Gebläse 62 mit seinem Gehäuse 66 sowie die Wände (einschließlich der Wand 81) des Kanals 82, die Leitbleche 94 und 102, die Sümpfe 104 und 108 und die Körnerschnecke 48 und die Überkehrschnecke 52 sind jedoch starr mit dem Rahmen 12 verbunden. Die Breite der Reinigungseinrichtung 46 und ihrer Organe entspricht zumindest etwa der Breite des Mehrtrommeldreschwerks und der Strohschüttler 32.

Während des Betriebs erzeugt das Gebläse 62 auch im ersten Gebläseauslass 68 einen Luftstrom, der zum Teil durch den Rost 96 nach hinten und oben hindurchströmt. Der verbleibende Luftstrom aus dem ersten Gebläseauslass 68 gelangt, teilweise geführt durch die Luftleitbleche 112, an die Unterseite des Untersiebs 92 und durchströmt es. Der durch den Rost 96 und das Untersieb 92 tretende Luftstrom gelangt zur Fallstufe 88 und an die Unterseite des Obersiebs 90.

Das Gemisch aus Korn, Kurzstroh und Spreu, das - wie bereits oben erwähnt - an der Rückseite des Vorreinigungssiebs 72 durch den Fingerrechen 78 hindurch oder an seiner Oberseite entlang auf das Obersieb 90 gelangt, wird durch das Obersieb 90 in an sich bekannter Weise durch den Luftstrom und die Sieblamellen 114 gereinigt. Das durch das Obersieb 90 hindurch tretende Gemisch aus Korn und Spreu gelangt auf das Untersieb 92, während die verbleibende Spreu und das Kurzstroh durch den Luftstrom nach hinten abgefördert und vorzugsweise durch den bereits erwähnten Spreuverteiler oder Strohhäcksler aus dem Mähdrescher 10 ausgetragen wird. Das Gemisch aus Spreu und Korn auf dem Untersieb 92 wird durch das Untersieb 92 ebenfalls in an sich bekannter Weise gereinigt, wobei das zwischen den Sieblamellen 116 des Untersiebs 92 hindurch tretende Korn durch den unteren Förderboden 110 zur Körnerschnecke 48 und in den Korntank 50 gelangt. Die Überkehr wird an der Rückseite des Untersiebs 92 durch das Bodenblech 106 zur Überkehrschnecke 52 verbracht.

Das ebenfalls bereits oben erwähnte Gemisch aus Korn und Spreu, das die Sieblamellen des Vorreinigungssiebs 72 passiert, fällt auf den Rost 96. Das auf dem Rost 96 liegende Gemisch aus Korn und Spreu wandert entlang der Oberseite des Rosts 96 nach hinten und gelangt anschließend auf das Untersieb 92, auf dem es in der oben erwähnten Weise in Korn und Überkehr getrennt wird. Der durch den Rost 96 nach oben und hinten strömende Luftstrom bewirkt eine Auflockerung des Gemischs und führt leichtere Partikel (Spreu) mit sich mit. Auf das Untersieb 92 gelangt daher ein aufgelockertes und in einem gewissen Maße weiter vorgereinigtes Gemisch.

Der Rost 96 könnte einen Teil des in dem Gemisch enthaltenen Korns direkt nach unten durchlassen, so dass sie in den trichterförmigen Sumpf 104 der Körnerschnecke 48 bzw. seine nach vorn ansteigende Verlängerung fallen und von dort direkt in den Korntank 50 transportiert werden. Dieses Korn belastet das Untersieb 92 demnach nicht.

Es sei noch angemerkt, dass das Vorreinigungssieb 72 durch einen weiteren Förderboden ersetzt werden könnte.

## Patentansprüche

1. Reinigungseinrichtung (46) für einen Mähdrescher (10), mit einem Förderboden (40), dessen Oberseite im Betrieb ein Gemisch aus Korn und Spreu zuführbar ist, einer an einem rückwärtigen Ende des Förderbodens (40) angeordneten Fallstufe (86) und einem Gebläse (62), das durch einen luftleitenden Kanal (82) mit der Fallstufe (86) verbunden ist, wobei ein der Fallstufe (86) direkt benachbarter, durch eine obere Wand und eine untere Wand (81) nach oben und unten begrenzter Bereichs des Kanals (82) wenigstens ein Luftleitelement (114) umfasst, welches einen vom Gebläse (62) her einlaufenden, horizontalen Luftstrom im Betrieb nach schräg nach oben und hinten hin ablenkt, **dadurch gekennzeichnet, dass** das separate Luftleitelement (114) innerhalb des Kanals (82) beabstandet von der oberen und unteren Wand (81) angeordnet ist.

2. Reinigungseinrichtung (46) nach Anspruch 1, wobei das Luftleitelement (114) in sich flach oder winkelförmig oder konkav gekrümmt ist.

3. Reinigungseinrichtung (46) nach Anspruch 1, wobei die untere Wand (81) des Kanals (82) horizontal und flach ist und die obere Wand des Kanals (82) durch den Förderboden (40) gebildet wird.

4. Reinigungseinrichtung (46) nach einem der vorhergehenden Ansprüche, wobei das Gebläse (62) ein Gehäuse (66) mit einem in seinen vorderen, oberen Bereich liegenden Auslass (70) aufweist, an den sich der Kanal (82) anschließt.

5. Reinigungseinrichtung (46) nach Anspruch 4, wobei der sich an den Auslass (70) anschließende Bereich (76) des Kanals (82) sich nach oben erstreckt und dann nach hinten umbiegt.

6. Reinigungseinrichtung (46) nach einem der vorhergehenden Ansprüche, wobei am rückwärtigen Ende des Förderbodens (40) ein Fingerrechen (44) angeordnet ist.

7. Reinigungseinrichtung (46) nach einem der vorhergehenden Ansprüche, wobei stromab der Fallstufe (86) ein Vorreinigungssieb (72) und/oder ein Förderboden angeordnet ist, stromab dem eine weitere Fallstufe (88), ein Obersieb (90) und ein Untersieb (92) folgen.

8. Reinigungseinrichtung (46) nach einem der vorhergehenden Ansprüche, wobei das Luftleitelement (114) um eine horizontale und quer verlaufende Achse (116) verstellbar ist.

9. Reinigungseinrichtung (46) nach einem der vorhergehenden Ansprüche, wobei mehrere Luftleitelemente (114) im der Fallstufe (86) benachbarten Bereich des Kanals (82) übereinander angeordnet sind.

10. Mähdrescher (10) mit einer Drescheinrichtung und einer Reinigungseinrichtung (46) nach einem der Ansprüche 1 bis 9, deren Förderboden (40) von der Drescheinrichtung mit einem Gemisch aus Korn und Spreu beaufschlagbar ist.

## Claims

1. Cleaning device (46) for a combine (10), with a conveying floor (40), to the upper side of which a mixture of grain and chaff can be supplied during operation, a dropping step (86) arranged at a rear end of the conveying floor (40), and a blower (62) which is connected to the dropping step (86) by an air-conducting duct (82), wherein a region of the duct (82) that is directly adjacent to the dropping step (86) and is upwardly and downwardly bounded by an upper wall and a lower wall (81) comprises at least one air-conducting element (114) which deflects a horizontal air flow entering from the blower (62) obliquely upwards and rearwards during operation, **characterized in that** the separate air-conducting element (114) is arranged within the duct (82) at a distance from the upper and lower wall (81).

2. Cleaning device (46) according to Claim 1, wherein the air-conducting element (114) has a curvature per se which is flat or angular or concave.

3. Cleaning device (46) according to Claim 1, wherein the lower wall (81) of the duct (82) is horizontal and flat, and the upper wall of the duct (82) is formed by the conveying floor (40).

4. Cleaning device (46) according to one of the preceding claims, wherein the blower (62) has a housing (66) with an outlet (70) which is located in its front upper region and which is adjoined by the duct (82).

5. Cleaning device (46) according to Claim 4, wherein that region (76) of the duct (82) which adjoins the outlet (70) extends upwards and then bends over rearwards.

6. Cleaning device (46) according to one of the preceding claims, wherein a finger rake (44) is arranged at the rear end of the conveying floor (40).

7. Cleaning device (46) according to one of the preceding claims, wherein arranged downstream of the dropping step (86) is a pre-cleaning sieve (72) and/or a conveying floor, which are followed downstream by a further dropping step (88), an upper sieve (90) and a lower sieve (92).

8. Cleaning device (46) according to one of the preceding claims, wherein the air-conducting element (104) is adjustable about a horizontal and transversely extending axis (116).

9. Cleaning device (46) according to one of the preceding claims, wherein a plurality of air-guiding elements (114) are arranged one above another in that region of the duct (82) which is adjacent to the dropping step (86).

10. Combine (10) with a threshing device and a cleaning device (46) according to one of Claims 1 to 9, the conveying floor (40) of which can be charged with a mixture of grain and chaff by the threshing device.

## Revendications

1. Dispositif de nettoyage (46) pour une moissonneuse-batteuse (10), comprenant un fond de transport (40) au côté supérieur duquel, pendant le fonctionnement, peut être acheminé un mélange de grain et de paille, un redans (86) disposé au niveau d'une extrémité arrière du fond de transport (40) et une soufflante (62) qui est raccordée par un conduit de guidage d'air (82) au redans (86), une région du conduit (82) directement adjacente aux redans (86), limitée en haut et en bas par une paroi supérieure et une paroi inférieure (81), comprenant au moins un élément de guidage d'air (114) qui dévie obliquement vers le haut et vers l'arrière pendant le fonctionnement un flux d'air horizontal entrant depuis la soufflante (62), **caractérisé en ce que** l'élément de guidage d'air séparé (114) est disposé à l'intérieur du conduit (82) à distance de la paroi supérieure et inférieure (81).

2. Dispositif de nettoyage (46) selon la revendication 1, dans lequel l'élément de guidage d'air (114) présente en soit une courbure plate ou coudée ou concave.

3. Dispositif de nettoyage (46) selon la revendication 1, dans lequel la paroi inférieure (81) du conduit (82) est horizontale et plate et la paroi supérieure du conduit (82) est formée par le fond de transport (40).

4. Dispositif de nettoyage (46) selon l'une quelconque des revendications précédentes, dans lequel la soufflante (62) présente un boîtier (66) avec une sortie (70) située dans sa région avant supérieure, à laquelle se raccorde le conduit (82).

5. Dispositif de nettoyage (46) selon la revendication 4, dans lequel la région (76) du conduit (82) se raccordant à la sortie (70) s'étend vers le haut puis se recourbe vers l'arrière.

6. Dispositif de nettoyage (46) selon l'une quelconque des revendications précédentes, dans lequel un râteau à doigts (44) est disposé au niveau de l'extrémité arrière du fond de transport (40).

7. Dispositif de nettoyage (46) selon l'une quelconque des revendications précédentes, dans lequel un crible de pré-nettoyage (72) et/ou un fond de transport sont disposés en aval du redans (86), en aval duquel sont situés un redans supplémentaire (88), un crible supérieur (90) et un crible inférieur (92).

8. Dispositif de nettoyage (46) selon l'une quelconque des revendications précédentes, dans lequel l'élément de guidage d'air (114) peut être déplacé autour d'un axe horizontal et s'étendant transversalement (116).

9. Dispositif de nettoyage (46) selon l'une quelconque des revendications précédentes, dans lequel plusieurs éléments de guidage d'air (114) sont disposés les uns au-dessus des autres dans la région du conduit (82) adjacente au redans (86).

10. Moissonneuse-batteuse (10) comprenant un dispositif de battage et un dispositif de nettoyage (46) selon l'une quelconque des revendications 1 à 9, dont le fond de transport (40) peut être sollicité par le dispositif de battage avec un mélange de grains et de paille.
